# DEMANDE DE BREVET EUROPEEN

(11) **EP 1 610 145 A1**
(43) Date de publication de la demande: **28.12.2005**
(21) Numéro de dépôt: 04447150.6
(22) Date de dépôt: 22.06.2004
(51) Int. Cl.: G01S 3/42, H01Q 1/12, H01Q 3/08

(54) **Dispositif d'orientation d'antenne**

(71) Demandeur: Doutrepont, Georges, 4651 Battice (BE); Straetmans, Henri, 4650 Chaineux (BE)
(72) Inventeur: Doutrepont, Georges, 4651 Battice (BE); Straetmans, Henri, 4650 Chaineux (BE)

(57) **Abrégé**

La présente invention concerne un dispositif d'orientation d'antenne qui comporte au moins un système de positionnement GPS (11) qui détermine les coordonnées de position de l'antenne (3) sur la terre, une boussole (13) qui détermine l'orientation de l'antenne (3) par rapport au nord magnétique, un moteur de positionnement (7) de l'antenne pour ce qui concerne son azimut, un moteur de positionnement (9) de l'antenne pour ce qui concerne son élévation, un interface utilisateur (15) pour le démarrage (17) dudit dispositif d'orientation d'antenne et le choix (19) d'un satellite géostationnaire (1) ainsi qu'un calculateur (21) qui pilote à l'aide de moyens connus en soi (23,25) les moteurs de positionnement (7,9) en fonction des informations reçues des divers capteurs (11) et du choix de satellite géostationnaire (1) afin de pointer ladite antenne (3) substantiellement sur ledit satellite (1).

## Description

La présente invention concerne un dispositif d'orientation sur un satellite géostationnaire, d'une antenne de réception appropriée montée sur une plateforme mobile, par exemple un véhicule.

Des dispositifs d'orientation d'antenne sont connus dans l'état de la technique. Ils s'orientent généralement sur l'émetteur selon l'intensité du signal capté.

On connaît notamment par le document GB-2159335 un procédé et appareillage pour automatiquement suivre un satellite de communication à l'aide de l'antenne de réception. Il s'agit dans ce cas d'une antenne parabolique montée sur une plateforme mobile, tel un navire. Les signaux reçus de capteurs de l'azimut, de l'élévation et de l'inclinaison ainsi que le signal de réception sont envoyés à un calculateur qui commande l'antenne de façon à compenser les mouvements de la plateforme et selon un balayage en forme de spirale.

La présente invention cherche à fournir un dispositif différent et simple pour l'orientation d'une antenne de réception, comme par exemple une antenne parabolique ou assimilable pour la réception de signaux audio-visuels. Il s'agit d'un dispositif qui fait appel aux technologies connues du type GPS (Global Positioning System). Vu l'utilisation de cette technologie, il n'est pas nécessaire de faire appel à l'intensité du signal reçu afin de positionner l'antenne de façon optimale.

Conformément à la présente invention, le dispositif d'orientation d'antenne comporte au moins un système de positionnement GPS qui détermine les coordonnées de position de l'antenne sur la terre, un moyen qui détermine l'orientation de l'antenne par rapport au nord magnétique, un moteur de positionnement de l'antenne pour ce qui concerne son azimut, un moteur de positionnement de l'antenne pour ce qui concerne son élévation, un interface utilisateur pour le démarrage dudit dispositif d'orientation d'antenne et le choix d'un satellite géostationnaire ainsi qu'un calculateur qui pilote à l'aide de moyens connus en soi les moteurs de positionnement en fonction des informations reçues des divers capteurs et du choix de satellite géostationnaire afin de pointer ladite antenne substantiellement sur ledit satellite.

Selon une forme d'exécution préférée, le dispositif de l'invention comporte encore un détecteur de position pour ce qui concerne l'azimut et un détecteur de position d'élévation. Ces détecteurs sont, de préférence, pour des raisons de facilité, des détecteurs de position de repos. Il est bien entendu qu'en cas d'omission de ces détecteurs, il y a lieu de veiller, pour des raisons de précision, à ce que l'antenne se retrouve en position de repos ou position zéro prédéterminée avant chaque nouveau calcul de positionnement.

Le moyen de détermination de l'orientation de l'antenne par rapport au nord magnétique consiste avantageusement en une boussole connue en soi.

Le moteur de positionnement de l'antenne selon l'azimut déterminé par le calculateur consiste avantageusement en un moteur permettant une rotation d'approximativement 360 degrés de l'antenne autour d'un axe normal à la plateforme mobile sur laquelle est montée l'antenne.

En outre, le moteur de positionnement de l'antenne selon l'élévation déterminée par le calculateur consiste avantageusement en un moteur permettant une rotation allant jusqu'à 180 degrés par rapport à la plateforme autour d'un axe perpendiculaire à l'axe normal à ladite plateforme mobile.

En variante, le dispositif de l'invention peut encore comporter un détecteur de niveau dans un axe et, de préférence, dans un axe perpendiculaire à celui-ci. En l'absence de ces détecteurs de niveau, il est évident qu'il y a lieu de veiller à ce que la plateforme soit en position substantiellement horizontale.

Selon une première variante, le choix du satellite géostationnaire est fixé d'avance. Dans ce cas, l'interface utilisateur ne sert qu'à démarrer ou arrêter le dispositif de l'invention.

Selon une autre variante de l'invention, l'interface utilisateur consiste en un sélecteur à multiples positions ou en un ensemble de boutons poussoirs reliés par des moyens connus en soi au calculateur pour la transmission de l'information du choix du satellite géostationnaire voulu. On peut également prévoir des moyens plus complexes, tels que des interfaces a écrans permettant des choix multiples programmés.

Les liaisons entre l'interface utilisateur et le calculateur et entre le calculateur et les commandes des moteurs de positionnement ainsi qu'entre les divers capteurs ou détecteurs et le calculateur peuvent être de divers types connus en soi. Il peut, bien entendu, s'agir de connexions par câble ou de connexions sans fil, comme les connexions dites "Blue Tooth" (nom commercial) ou à infra-rouge ou autres ou des combinaisons de celles-ci.

Le dispositif de l'invention permet de positionner automatiquement une antenne orientable afin de pointer facilement, rapidement et de façon fiable un satellite géostationnaire choisi par l'utilisateur. Il calcule l'orientation appropriée à partir des informations reçues du système GPS, de la boussole et corrige le calcul, le cas échéant, à l'aide des informations reçues des détecteurs de niveau, et commande ensuite les moteurs de positionnement de l'antenne de réception afin de faire pointer l'antenne sur le satellite géostationnaire voulu. Le dispositif de l'invention convient particulièrement pour les voyageurs ou professionnels itinérants, comme les chauffeurs de camion, les vacanciers en caravane ou mobil home, car il leur permet de capter aisément lorsqu'ils sont à l'arrêt, des informations et notamment des émissions audio-visuelles diffusées par les satellites géostationnaires.

Des programmes de calcul de l'azimut et de l'élévation d'un satellite géostationnaire, pour un endroit donné sont connus. A titre d'exemple, citons le programme dit Satpos, disponible en « opensource », voir http://opensourcegis.org.

Selon un autre aspect de la présente invention, celle-ci fournit donc également un procédé pour orienter une antenne de réception, notamment une antenne de réception montée sur une plateforme mobile, substantiellement sur un satellite géostationnaire, procédé caractérisé par les étapes suivantes: (i) choix d'un satellite géostationnaire, (ii) localisation de l'antenne par un système de positionnement du type GPS, (iii) détermination de l'orientation de ladite antenne par rapport au nord magnétique, (iv) calcul de l'angle d'azimut et de l'angle d'élévation de l'antenne en fonction des informations reçues du système GPS et de divers capteurs, et (v) commande de moteurs de positionnement de l'antenne selon l'angle d'azimut calculé et selon l'angle d'élévation calculé. Avantageusement, le procédé comporte une étape de correction du calcul en fonction de données reçues de détecteurs de niveau selon un certain axe et un axe perpendiculaire celui-ci.

L'invention est décrite plus en détails ci-dessous, à l'appui des dessins dans lesquels:
- la figure 1 est une représentation schématique du dispositif d'orientation d'antenne selon l'invention;
- la figure 2 est une vue latérale d'une antenne selon l'invention;
- la figure 3 est une vue latérale de l'antenne en position de repos;
- la figure 4 est une vue du dessus de l'antenne de la figure 3 ;
- la figure 5 est une vue du dessus de l'antenne de l'invention, à l'état ouvert mais en position de repos en ce qui concerne l'azimut ; et
- la figure 6 est une vue en plan montrant diverses positions de l'antenne réception.

Dans les dessins des repères de référence identiques représentent des éléments identiques ou similaires.

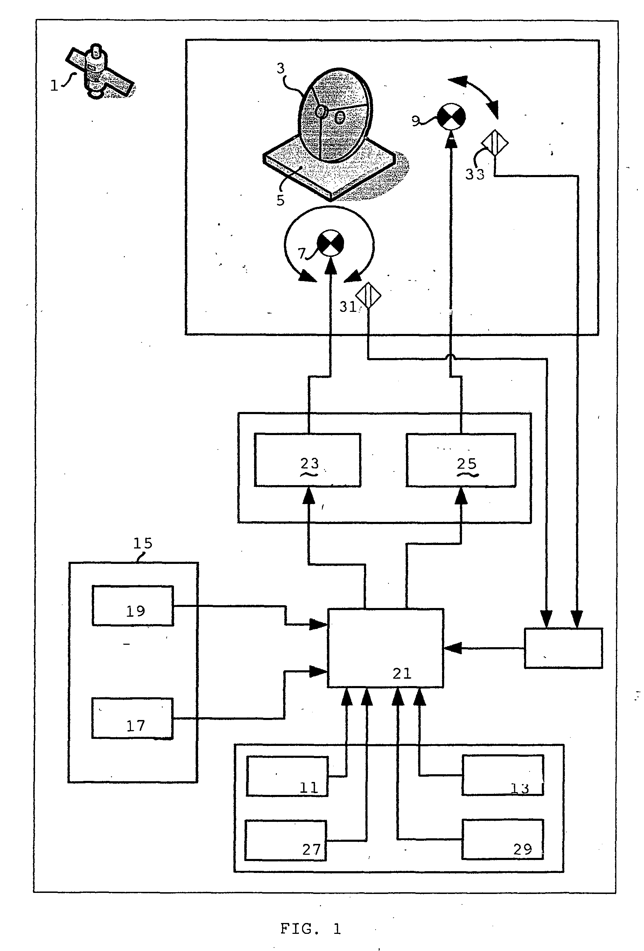

A la figure 1, on distingue un satellite géostationnaire 1 et une antenne parabolique 3 montée sur une base 5 solidaire d'un véhicule, par exemple. L'antenne est commandée par deux moteurs de positionnement: un premier moteur de positionnement 7 selon l'azimut calculé et un deuxième moteur de positionnement 9 selon un angle d'élévation calculé. Le moteur de positionnement 7 permet avantageusement une rotation de l'antenne substantiellement de 360 degrés autour d'un axe normal à la plateforme (non représentée) sur laquelle est montée l'antenne. Pour ce qui concerne le moteur de positionnement 9, il suffit que celui-ci permette une rotation de l'antenne allant jusqu'à substantiellement 180 degrés, par rapport à ladite plateforme, autour d'un axe perpendiculaire à l'axe de rotation du moteur de positionnement 7. A la figure 1, on distingue encore un dispositif de localisation du type GPS 11 qui permet la localisation de l'antenne sur la terre, ainsi qu'une boussole 13 qui détermine l'orientation de l'antenne par rapport au nord magnétique. L'interface utilisateur porte le repère de référence 15. Il comporte un commutateur marche/arrêt 17 et un sélecteur a choix multiples 19. Le système GPS 11, la boussole 13 et l'interface utilisateur 15 sont reliés à un calculateur 21. Celui-ci commande à son tour les moteurs de positionnement 7 et 9 par l'intermédiaire de moyens connus, à savoir des modules de commande de puissance 23 et 25, respectivement.

Il est bien entendu que le calculateur 21 peut être un calculateur spécifiquement destiné au dispositif de l'invention, mais qu'il peut également être intégré dans un autre appareillage, à savoir faire partie du calculateur propre du véhicule sur lequel est montée l'antenne. Dans ce cas, le dispositif de l'invention utilise certaines fonctionnalités du calculateur dudit véhicule.

L'interface utilisateur 15 peut consister en un module fixe solidaire du tableau de bord du véhicule équipé du dispositif de l'invention ou consister en un module portable ou amovible relié au calculateur 21, soit par fil, soit sans fil; dans ce dernier cas, il s'agit d'une liaison du type "Blue Tooth" (nom commercial) ou par infra-rouge.

Le dispositif de l'invention peut encore avantageusement comporter des détecteurs de niveau 27 et 29 selon deux axes essentiellement perpendiculaires X et Y, respectivement.

Selon une forme d'exécution préférée, le dispositif de l'invention comporte encore un détecteur de position de repos pour l'azimut 31 et un détecteur de position de repos pour l'élévation 33, afin de faciliter le positionnement approprié de l'antenne en fonction des informations reçues.

A titre d'exemple, on décrit ci-après un scénario d'utilisation. Pour commencer, l'utilisateur met en marche le dispositif de l'invention à l'aide du commutateur 17. Il choisit ensuite le satellite sur lequel il veut se positionner, repéré par exemple par un numéro sur le sélecteur 19. Il est bien entendu que la sélection de satellite peut se faire de diverses manières, par exemple, un sélecteur mécanique, le choix d'un nombre sur une commande à distance, ou le choix dans un menu de programme d'ordinateur. L'utilisateur confirme son choix et demande au calculateur 21 de positionner l'antenne 3. Le calculateur interroge les détecteurs de position 31, 33 qui confirment si l'antenne est en position de repos ou non. Si l'un des détecteurs 31 ou 33 ou les deux détecteurs 31 et 33 ne sont pas en position de repos, le calculateur 21 commande les moteurs de positionnement correspondants 7 et 9 via les modules de puissance 23 et 25 dans le but de ramener l'antenne 3 en position de repos. Dès que les détecteurs de position 31 et 33 sont en position de repos, le calculateur interroge les divers capteurs dont il reçoit les informations suivantes: du système GPS 11, il reçoit la longitude et la latitude; de la boussole 13, il reçoit l'orientation de l'antenne par rapport au nord magnétique; du détecteur de niveau x 27, il reçoit la valeur de l'inclinaison selon l'axe X et du détecteur de niveau y 29, la valeur de l'inclinaison selon l'axe Y. Le calculateur 21 calcule (voir par exemple le programme « opensource » Satpos), en fonction de l'ensemble de ces paramètres, l'azimut et l'élévation à donner à l'antenne, moyennant un algorithme connu en soi. Cet algorithme tient bien entendu compte de la position du satellite géostationnaire choisi, de la longitude et de la latitude de l'antenne, de l'orientation de celle-ci par rapport au nord réel (qui est le nord magnétique corrigé) et, le cas échéant, de l'inclinaison selon les axes X et Y. Le calculateur commande ensuite les moteurs de positionnement 7 et 9, par exemple selon la séquence suivante: (i) positionner le moteur d'élévation à l'angle calculé et (ii) positionner le moteur d'azimut à l'angle calculé et contrôler que la boussole confirme bien l'angle. Si tel n'est pas le cas, recommencer la procédure jusqu'à ce que l'angle donné par la boussole 13 soit égal à celui à atteindre. Lorsque l'utilisateur choisit un autre satellite 1, il y a donc lieu de répéter la procédure. Lorsque l'utilisateur choisit d'arrêter le dispositif, le calculateur remet l'antenne 3 en position de repos, par exemple, comme suit: commander le moteur d'élévation 9 jusqu'à ce qu'une position d'élévation soit atteinte qui facilite la rotation de l'antenne; ensuite commander le moteur d'azimut 7 jusqu'à ce que la position de repos en ce qui concerne l'azimut soit détectée et puis de nouveau commander le moteur d'élévation 9 jusqu'à ce que la position de repos soit détectée.

On peut se défaire des détecteurs de niveau pour des raisons de simplification. Il est bien entendu que, dans ce cas, il y a lieu de veiller à ce que la plateforme sur laquelle est montée l'antenne soit la plus horizontale possible; ce qui est généralement le cas pour une caravane ou un camion à l'arrêt, puisque le chauffeur gare son camion en conséquence ou équilibre la caravane en position horizontale sur des pieds réglables.

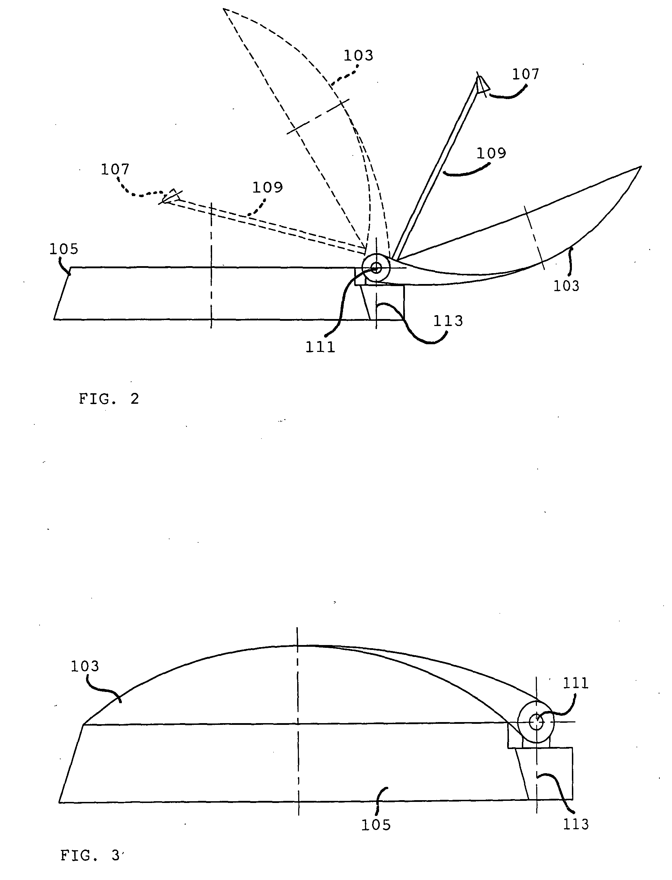

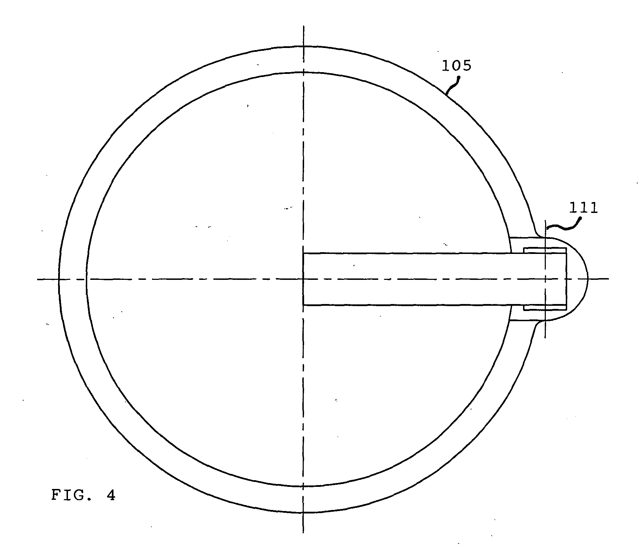

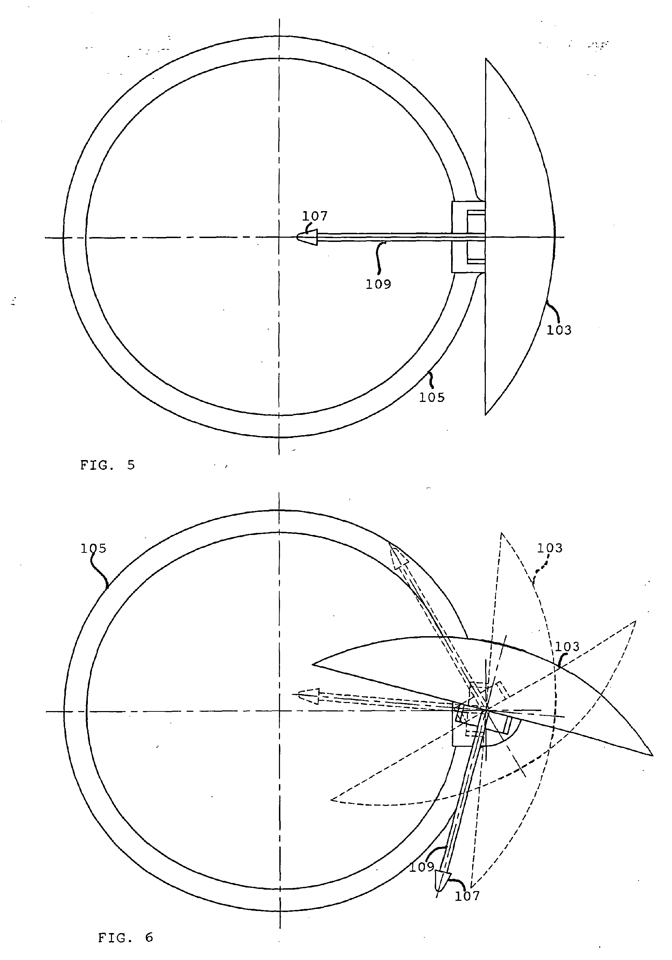

La figure 2 représente schématiquement une antenne selon l'invention, en diverses positions ouvertes. Elle comporte une antenne de réception 103 essentiellement parabolique ou de forme équivalente pour la réception de signaux audio-visuels, articulée sur un socle 105 solidaire d'un véhicule (non représenté), comme la cabine d'un camion par exemple, et un récepteur 107 en son foyer, monté à l'extrémité d'un bras 109. La parabole 103 pivote par rapport au socle 105 moyennant une articulation à axe 111 (mouvement d'élévation) essentiellement dans le plan supérieur du socle 105, agencée au sommet inférieur de la parabole 103. Le bras 109 portant le récepteur 107 est relié au sommet inférieur de la parabole 103, est escamotable dans le creux de la parabole 103 lorsque celle-ci est repliée sur son socle 105 pour un encombrement réduit (voir figures 3 et 4), et est amené et maintenu en position fixe par rapport à la parabole 103, à savoir en son foyer, lorsque celle-ci est en position ouverte de réception, à l'aide d'une tringlerie munie d'un ressort de rappel. La position fermée des figures 3 et 4 correspond à la position de repos. La figure 5 représente l'antenne en position ouverte ; il peut s'agir là de la position de repos pour ce qui concerne l'azimut. Comme on peut le voir à la figure 3, l'articulation à axe 111 est montée sur un axe perpendiculaire 113 qui permet encore une rotation de la parabole 103 avec son récepteur 107 autour de cet axe 113, par rapport au socle 105, afin de permettre la rotation d'azimut. La figure 6 représente diverses positions de réception de la parabole 103 avec son récepteur 109.

La rotation autour de l'axe 111 peut avantageusement être commandée par un moteur-réducteur axial (9) logé dans l'articulation à axe 111. La rotation autour de l'axe 113 est avantageusement commandée par un groupe d'entraînement comportant moteur et réducteur (7) logé dans l'articulation ou dans le socle 105.

Il est bien entendu que la description ci-dessus n'est donnée qu'à titre d'exemple et qu'elle ne vise nullement à limiter la portée de la présente invention.

## Revendications

1. Dispositif d'orientation d'antenne comportant au moins un système de positionnement GPS (11) qui détermine les coordonnées de position de l'antenne (3) sur la terre, un moyen (13) qui détermine l'orientation de l'antenne (3) par rapport au nord magnétique, un moteur de positionnement de l'antenne pour ce qui concerne son azimut (7), un moteur de positionnement de l'antenne pour ce qui concerne son élévation (9), un interface utilisateur (15) pour le démarrage (17) dudit dispositif d'orientation d'antenne et le choix (19) d'un satellite géostationnaire (1) ainsi qu'un calculateur (21) qui pilote à l'aide de moyens connus en soi (23,25) les moteurs de positionnement (7,9) en fonction des informations reçues des divers capteurs (11,13,27,29) et du choix de satellite géostationnaire (1) afin de pointer ladite antenne (3) substantiellement sur ledit satellite (1).

2. Dispositif selon la revendication 1 **caractérisé en ce que** le dispositif de l'invention comporte encore un détecteur de position (31) pour ce qui concerne l'azimut et un détecteur de position d'élévation (33).

3. Dispositif selon la revendication 2 **caractérisé en ce que** les détecteurs (31,33) sont des détecteurs de position de repos.

4. Dispositif selon l'une quelconque des revendications précédentes **caractérisé en ce que** le moteur de positionnement (7) de l'antenne (3) selon l'azimut déterminé par le calculateur (21) consiste avantageusement en un moteur permettant une rotation d'approximativement 360 degrés de l'antenne autour d'un axe normal à la plateforme mobile sur laquelle est montée l'antenne (3).

5. Dispositif selon l'une quelconque des revendications précédentes **caractérisé en ce que** le moteur de positionnement (9) de l'antenne selon l'élévation déterminée par le calculateur (21) consiste avantageusement en un moteur permettant une rotation de 180 degrés à partir de la plateforme, autour d'un axe perpendiculaire à l'axe normale à ladite plateforme mobile.

6. Dispositif selon l'une quelconque des revendications précédentes **caractérisé en ce que** le dispositif de l'invention peut encore comporter un détecteur de niveau (27,29) dans un axe (X) et dans un axe (Y) perpendiculaire à celui-ci.

7. Dispositif selon l'une quelconque des revendications précédentes **caractérisé en ce que** le choix du satellite géostationnaire (1) est programmé d'avance.

8. Dispositif selon l'une quelconque des revendications 1 à 6 **caractérisé en ce que** l'interface utilisateur (15) comporte un sélecteur (19) à multiples positions ou un ensemble de boutons poussoirs reliés par des moyens connus en soi au calculateur pour la transmission de l'information du choix du satellite géostationnaire voulu (1).

9. Dispositif selon l'une quelconque des revendications 1 à 6 **caractérisé en ce que** l'interface utilisateur (15) consiste en un interface a écran permettant des choix multiples programmés.

10. Dispositif selon l'une quelconque des revendications précédentes **caractérisé en ce que** l'une au moins des liaisons entre l'interface utilisateur (15) et le calculateur (21) ou entre le calculateur (21) et les commandes (23,25) des moteurs de positionnement (7,9) ou entre les divers capteurs ou détecteurs (11,13,27,29) et le calculateur (21) est une connexion sans fil.

11. Procédé pour orienter une antenne de réception (3), notamment une antenne de réception montée sur une plateforme mobile, substantiellement sur un satellite géostationnaire (1), **caractérisé par** les étapes suivantes: (i) choix d'un satellite géostationnaire (1), (ii) localisation de l'antenne (3) par un systeme de positionnement du type GPS (11), (iii) détermination de l'orientation de ladite antenne (3) par rapport au nord magnétique, (iv) calcul de l'angle d'azimut et de l'angle d'élévation de l'antenne (3) en fonction des informations reçues du système GPS (11) et de divers capteurs (13,27,29), et (v) commande de moteurs de positionnement (7,9) de l'antenne (3) selon l'angle d'azimut calculé et selon l'angle d'élévation calculé.

12. Procédé selon la revendication 11 **caractérisé en ce qu'**il comporte une étape de correction du calcul en fonction de données reçues de détecteurs de niveau (27,29) selon un certain axe et un axe perpendiculaire celui-ci.
